# DEMANDE DE BREVET EUROPEEN

(11) **EP 0 655 367 A1**
(43) Date de publication de la demande: **31.05.1995**
(21) Numéro de dépôt: 94402729.1
(22) Date de dépôt: 29.11.1994
(51) Int. Cl.: B60R 16/02

(54) **Nouveau système de communication par multiplexage et le système de protection pour véhicules ainsi réalisé**

(30) Priorité: 30.11.1993 FR 9314292
(71) Demandeur: Martins, Manuel, F-93190 Livry Gargan (FR)
(72) Inventeur: Martins, Manuel, F-93190 Livry Gargan (FR)
(74) Mandataire: Burtin, Jean-François

(57) **Abrégé**

La présente invention se rapporte au domaine de l'électronique et plus particulièrement à un système de communication par multiplexage.

L'invention concerne en particulier une unité centrale de commande reliée à une succession de relais émetteurs/récepteurs disposés reliés à des unités de commande de différentes fonctions.

Le système de commande est piloté par un microprocesseur qui communique directement avec les relais satellites par l'intermédiaire d'un langage codé.

Application à la construction de dispositifs d'alarme ou antivol pour véhicules et notamment de véhicules automobiles.

## Description

La présente invention se rapporte au domaine de l'électronique et plus particulièrement à un système multiplex de commande.

L'invention concerne particulièrement une unité centrale de commande reliée a une succession de relais émetteurs/récepteurs disposés en série. Ces relais émetteurs/récepteurs sont alimentés en courant basse tension et sont destinés à assurer l'ensemble des fonctions nécessaires pour la mise en route ou la circulation d'un véhicule, comme par exemple, un véhicule automobile.

L'unité centrale de commande est alimentée par une source électrique et le contact avec les relais émetteurs/récepteurs s'effectue soit par radiofréquence ultrasons ou infrarouge.

De ce fait, il n'existe aucune liaison par fil entre l'unité centrale de commande et les relais émetteurs/récepteurs. Lorsque le contact est établi entre l'unité centrale et les relais, le démarrage du véhicule est possible. Au contraire, si le contact n'est pas établi ou ne peut pas être établi, on peut interdire le démarrage du véhicule.

Il existe, en outre, une possibilité de dialogue entre les relais satellites eux-mêmes. De ce fait, si l'installation ou la connexion n'est pas correctement établie, le véhicule ne pourra pas non plus démarrer. Il existe ainsi, une possibilité de vérification de la qualité de l'installation.

Le présent système selon l'invention présente, en outre, l'avantage d'un gain de temps considérable et d'une sécurité accrue lors de l'installation car l'unité centrale, ainsi que les relais satellites sont de très petites dimensions et peuvent être fixés en n'importe quel point du véhicule.

En outre, le système de commande selon l'invention offre la possibilité de piéger le calculateur électronique du véhicule sans qu'un voleur éventuel ait la possibilité de neutraliser le système antivol global.

Le système de commande, selon l'invention, se caractérise par le fait qu'il est piloté par un microprocesseur qui communique directement avec les relais satellites par l'intermédiaire d'un langage codé et ceux-ci sont également pilotés par le microprocesseur. De ce fait, dans les logiciels disposés dans le système de commande, des microprocesseurs savent reconnaître le langage spécifique utilisé par les différents éléments du système et, en cas d'avarie ou de panne, sont en mesure d'assurer une nouvelle programmation du ou des éléments en cause sans remplacer le reste des éléments.

Ainsi, la sécurité de l'utilisateur est totale car le système central de commande ne sert qu'a envoyer l'autorisation de démarrage aux relais satellites et ensuite se trouve déconnecté car lesdits relais satellites ayant reçu l'ordre de démarrage, conservent la mémoire de cette instruction même si la centrale ne fonctionne plus.

L'ensemble du système dispose des instructions voulues pour pouvoir détecter, en outre, une ouverture de portes ou une ouverture de coffres sans qu'il soit besoin de passer des fils. Le système est également en mesure de déclencher une alarme sonore et/ou lumineuse.

Le système central de commande permet de faire communiquer, entre eux, les différents instruments électriques ou électroniques du véhicule en dehors d'un système d'alarme. Ainsi, le système est considérablement allégé et réalise une économie très importante de faisceaux de fils.

Le système central de commande selon l'invention, est commandé par une télécommande à ondes radio ou par infrarouge ainsi que par une clef électronique de secours. Le microprocesseur central comporte un système spécial d'apprentissage de chacun des codes utilisés. Le codage se fait sur 32 bits et permet ainsi 100 milliards de combinaisons.

La transmission de l'influx électrique entre la commande centrale et les relais satellites se fait par courants porteurs ou par fibres optiques. Cette liaison est donc d'une sécurité totale par rapport aux dispositifs électroniques d'alarme existants car ceux-ci utilisent énormément de fils dont la possibilité de neutralisation reste relativement facile étant donné que les interdictions de démarrage se font a l'intérieur de la centrale.

Une des caractéristiques du système central de commande réside dans le fait que celui-ci utilise des transistors à effet de champ (mosfets) pour recevoir et transmettre les informations codées.

Les schémas joints en annexe explicitent le fonctionnement du système.

Le système de commande selon l'invention peut être appliqué à d'autres domaines que celui de l'automobile en particulier aux bateaux et aux avions.

Le système selon l'invention est donc constitué par une unité centrale (A) équipée d'un microprocesseur comportant un ou plusieurs mosfets apte à émettre ou à recevoir un langage codé, et reliée par un moyen de liaison non filaire à un ou plusieurs relais satellites émetteurs/récepteurs (A)(C)(D)(D'), reliés entre eux dans les deux sens et disposés en série, présentant une liaison à la terre et une liaison à un courant continu basse tension qui leur permet de recevoir le langage codé de l'unité centrale et de transmettre l'information sous forme codée aux différents postes de fonctionnement du véhicule.

**Le schéma I** montre le montage de l'unité centrale (A) connectée à l'émetteur/récepteur (B) et au récepteur (D). De l'émetteur/récepteur partent les commandes de fonction, par exemple B1 à J1 comprenant, dans l'ordre, le fonctionnement de la batterie, l'alimentation permanente, l'éclairage interne, la fermeture des vitres, l'alimentation auxiliaire, la sirène avertisseuse, l'alimentation en 12v des feux, la fermeture des portes ou l'ouverture des portes.

Il peut y avoir deux codes de commande : l'un pour l'avertisseur (klaxon), et l'autre pour les coupures d'alimentation ou bien trois codes : l'un met tant en fonctionnement une sirène et les deux autres déclenchant l'ouverture et la fermeture des différentes fonctions.

**Le schéma II** montre au départ de l'émetteur/récepteur (B) la connexion aux différentes fonctions A1 (contact en 12v) à J1 (ouverture des portes).

**Le schéma III** montre au départ du relais (E) et au récepteur (D) par établissement de douze connections, la mise en fonctionnement des fonctions K1, L1, M1, N1 et P1 (choc des vitres)
**Le schéma IV** montre le montage de la centrale (A) avec en sortie le mosfet Q2.

**Le schéma V** montre un autre montage de la centrale (A) avec, en sortie, le mosfet Q4.

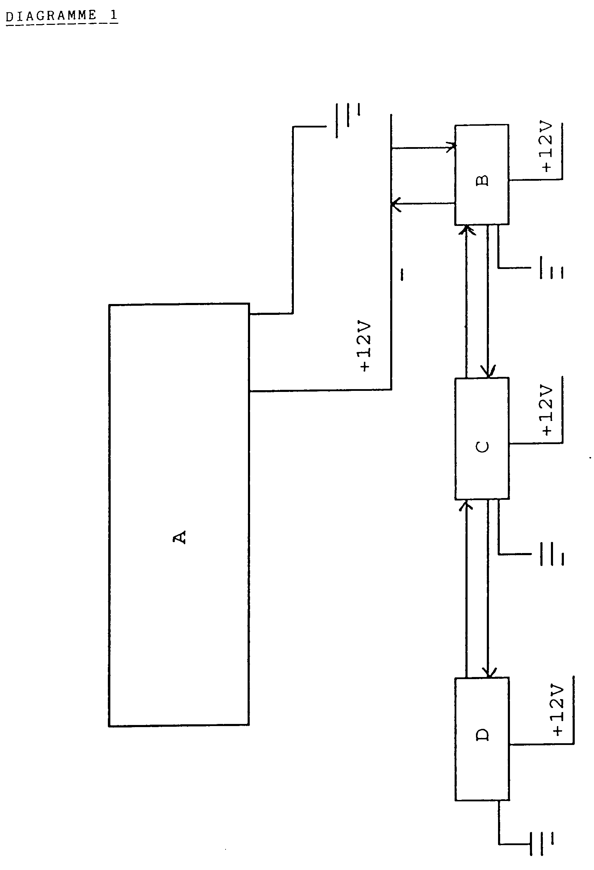

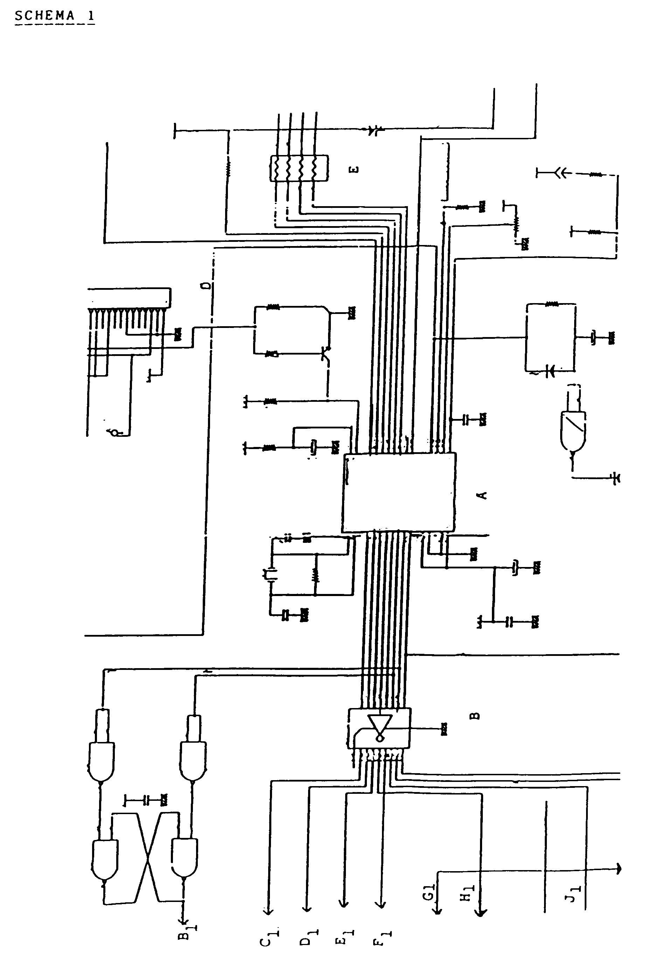

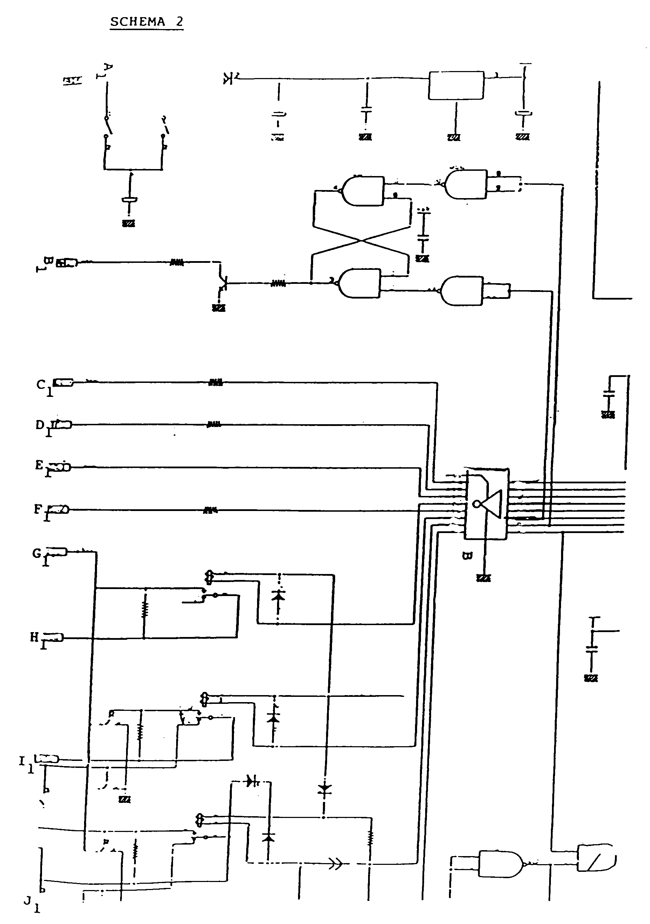

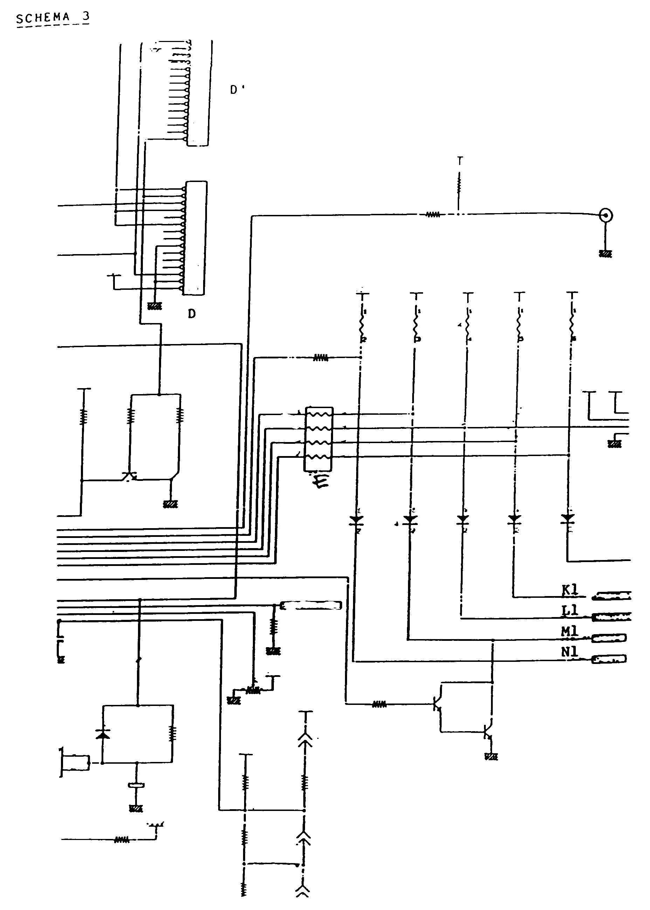

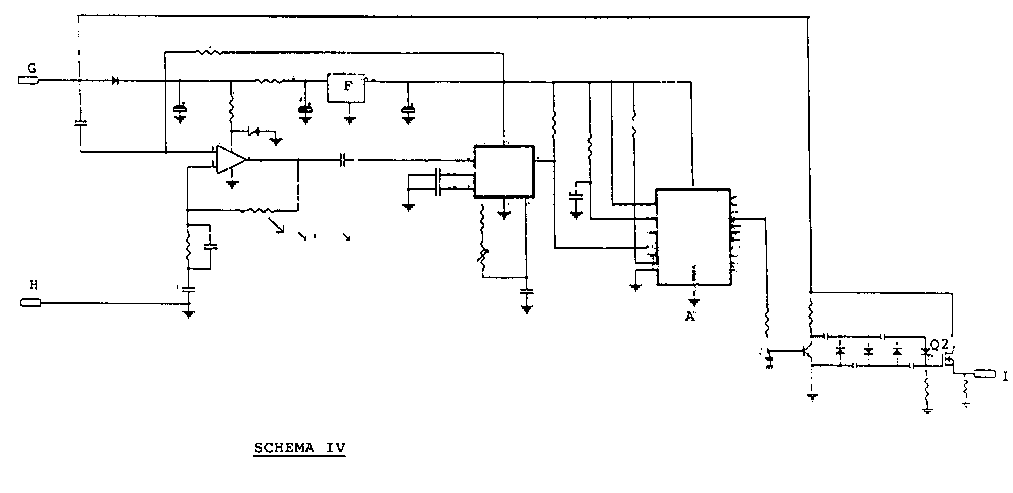

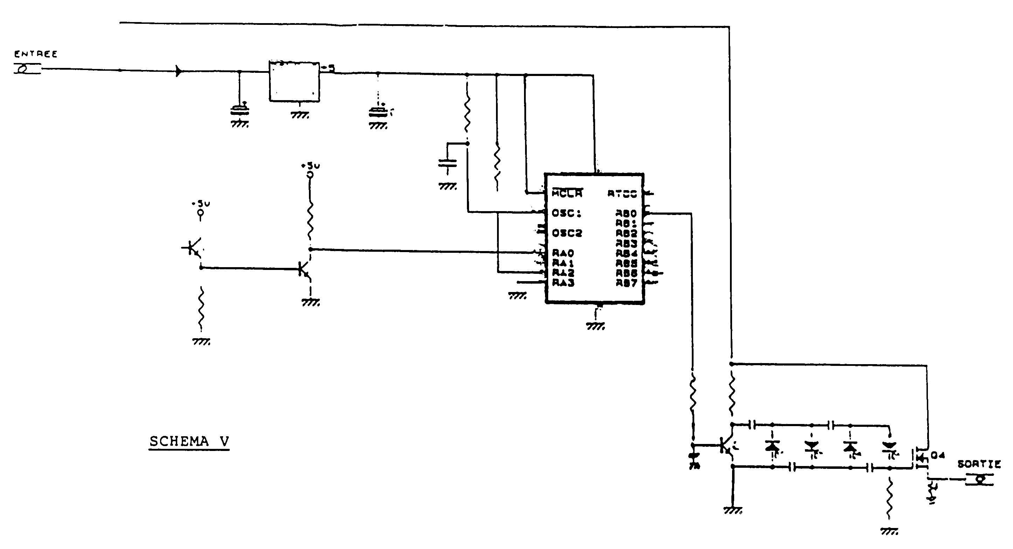

**Le diagramme 1** figure le montage général du dispositif de multiplexage selon l'invention.

## Revendications

1. Nouveau système de communication par multiplexage caractérisé en ce qu'il comporte une unité centrale de commande (A) reliée à une succession de relais émetteurs/récepteurs (B, C, D) connectés à des dispositifs fonctionnels assurant la commande des différents organes d'un véhicule (A1, B1, C1, D1, E1, F1, G1, H1, I1, J1, K1, L1, M1, N1, O1, P1).

2. Système de communication par multiplexage selon la revendication 1° caractérisé en ce que l'unité centrale de commande (A) est alimentée par une source électrique basse tension.

3. Système de communication par multiplexage selon la revendication 1° et la revendication 2° caractérisé en ce que la liaison entre la centrale de commande (A) et les relais émetteurs/récepteurs (B, C, D ...) s'effectue par radio fréquence ultrasons ou infrarouge.

4. Système de communication par multiplexage selon l'une des revendications 1 à 3° dans lequel l'unité centrale de commande est pilotée par un microprocesseur qui communique directement avec les relais satellite par l'intermédiaire d'un langage codé.

5. Système de communication par multiplexage selon l'une des revendications 1 à 4° dans lequel les relais émetteurs/récepteurs (B, C, D ...) sont eux-mêmes pilotés par le microprocesseur de l'unité centrale de commande (A).

6. Système de commande par multiplexage selon l'une des revendications 1 à 5° dans lequel les microprocesseurs savent reconnaître le langage spécifique de l'ensemble du système.

7. Système central de commande par multiplexage selon l'une des revendications 1 à 6° dans lequel le système est commandé par une télécommande à onde radio ou par infrarouge ou par une clef électronique..

8. Système de commande par multiplexage selon l'une des revendications 1 à 7° dans lequel la transmission du courant électrique entre la commande centrale (A) et les relais satellites s'effectue par courants porteurs ou par fibres optiques.

9. Système de commande par multiplexage selon l'une des revendications 1 à 8° dans lequel les informations codées émises par les microprocesseurs sont transmises par des transistors à effet de champ (Q2 ou Q4).

10. Système de commande par multiplexage tel que figuré dans l'un des schémas de montage I à V constitué par l'unité centrale (A) équipée d'un microprocesseur comportant un ou plusieurs mosfets (Q2 ou Q4), reliée par un moyen de liaison non filaire à plusieurs relais satellites émetteurs/récepteurs A, B, D, D' reliés entre eux dans les deux sens et disposés en série.

11. Véhicule équipé du dispositif de multiplexage selon l'une des revendications 1 à 9°
